# EUROPÄISCHE PATENTSCHRIFT

(11) **EP 2 708 447 B1**
(45) Veröffentlichungstag und Bekanntmachung des Hinweises auf die Patenterteilung: **06.06.2018**
(21) Anmeldenummer: 13001966.4
(22) Anmeldetag: 16.04.2013
(51) Int. Cl.: B62D 25/08, B62D 33/06

(54) **Abdeckelementanordnung an einem Frontend eines Fahrzeugs, insbesondere eines Nutzfahrzeuges**
Cover element assembly for a front end of a vehicle, particularly for a commercial vehicle
Agencement d'éléments de recouvrement à une extrémité frontale d'un véhicule, notamment d'un véhicule utilitaire

(30) Priorität: 14.09.2012 DE 102012018281
(43) Veröffentlichungstag der Anmeldung: 19.03.2014
(73) Patentinhaber: MAN Truck & Bus AG, 80995 München (DE)
(72) Erfinder: Geyer, Wolfgang, 80797 München (DE)
(74) Vertreter: Liebl, Thomas

(56) Entgegenhaltungen:
- EP-A1- 1 518 966
- WO-A1-2012/043147
- DE-A1- 19 608 048
- DE-B- 1 214 106
- FR-A1- 2 342 884
- JP-A- H10 230 776
- JP-A- 2006 248 405
- US-A- 4 521 050

## Beschreibung

Die Erfindung betrifft eine Abdeckelementanordnung an einem Frontend eines Fahrzeugs, insbesondere eines Nutzfahrzeuges und/oder insbesondere zur Abdeckung einer Wischeranlage, nach dem Oberbegriff des Anspruchs 1. Ferner betrifft die Erfindung ein Nutzfahrzeug nach dem Oberbegriff des Anspruchs 20.

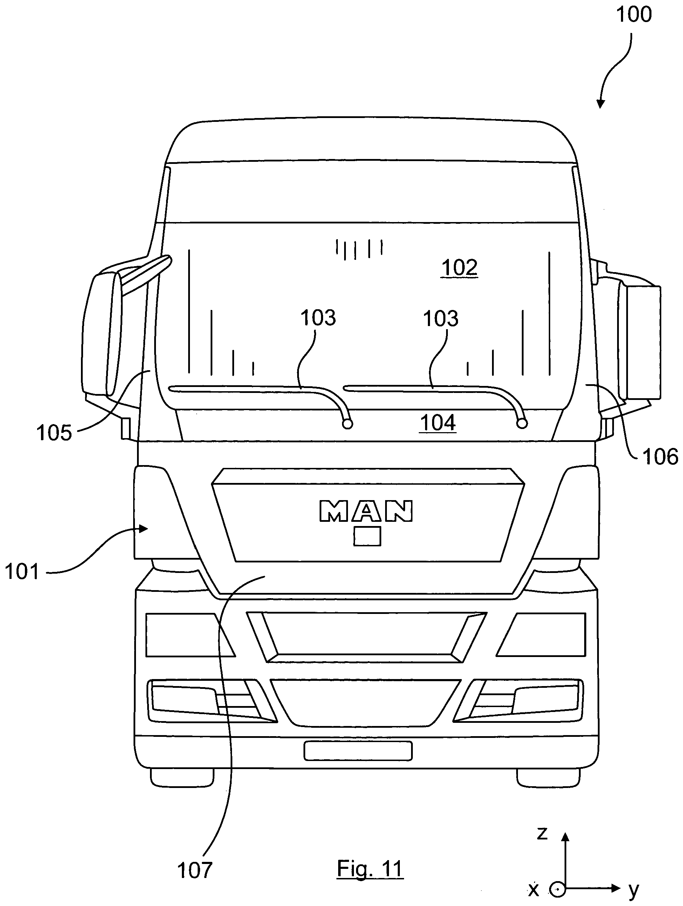

In der den Stand der Technik beispielhaft darstellenden Fig. 11 ist eine Frontalansicht eines hier ebenfalls beispielhaft dargestellten Nutzfahrzeuges 100 gezeigt. Konkret zeigt das Frontend 101 hier, jeweils bezogen auf ein übliches Fahrzeugkoordinatensystem (Fahrzeug-Hochachsenrichtung z, Fahrzeug-Querrichtung y, Fahrzeug-Längsrichtung x) in einem oberen Bereich eine Frontscheibe 102 mit zwei Scheibenwischern 103. Den Scheibenwischern 103 ist eine fahrzeugseitig angeordnete und hier nicht im Detail dargestellte Wischeranlage zugeordnet, die wenigstens teilweise von einem Abdeckelement 104 ab- bzw. überdeckt ist, das sich unterhalb der Frontscheibe 102 in Fahrzeugquerrichtung y gesehen zwischen gegenüberliegenden A-Säulenbereichen 105, 106 erstreckt.

An einen unteren Randbereich des Abdeckelementes 104 schließt sich eine beispielsweise öffenbare Frontklappe 107 an. Ansonsten entspricht der Aufbau dieses Frontends 101 dem allgemein bekannten Aufbau, so dass darauf nicht mehr näher eingegangen werden muss.

Im Falle von Reparatur- und/oder Wartungsarbeiten an der Wischeranlage ist es erforderlich, dass das Abdeckelement 104 schnell und einfach demontiert werden kann, um die Zugänglichkeit zur Wischeranlage zu gewährleisten. Dies stellt oftmals ein Problem dar und ist nur mit erheblichem Zeit- und Montageaufwand zu bewerkstelligen. Darüberhinaus besteht bei derartigen, auf herkömmliche Weise mittels Schraubverbindungen festgelegten Abdeckelementen regelmäßig das Problem der relativ aufwendigen Montage, da, wie die Fig. 11 zeigt, das Abdeckelement in relativ großer Höhe am Fahrzeug angeordnet ist. Für den Werker ist es zudem relativ mühevoll, die vorhandenen Schraubstellen in eine fluchtende Anlageverbindung aneinander zu bringen, um die entsprechenden Verschraubungen vornehmen zu können.

Darüberhinaus besteht in Verbindung mit derartigen Abdeckelementen oftmals das Problem, dass diese als Griffleiste "missbraucht" werden, das heißt, dass sich Fahrer daran festhalten können, um beispielsweise eine Scheibenreinigung vorzunehmen oder Wischerblätter der Scheibenwischerarme 103 auszutauschen bzw. zu reinigen. Da die Abdeckelemente 104 regelmäßig nicht für derartige Belastungen ausgelegt sind, kann es hier leicht zu einer unerwünschten Beschädigung derselben kommen.

Zudem sind aus der DE 196 08 048 A1 und aus der JP H 10 230 776 A Lösungen bekannt, bei denen am Abdeckelement Handgriffe angebracht sind. Hier kann es dann bei hohen Kraftbelastungen ebenfalls zu einer Beschädigung der Abdeckelemente kommen.

Es ist daher Aufgabe der vorliegenden Erfindung, eine Abdeckelementanordnung an einem Frontend eines Fahrzeugs, insbesondere eines Nutzfahrzeuges und/oder insbesondere zur Abdeckung einer Wischeranlage zur Verfügung zu stellen, die ein einfach montierbares bzw. demontierbares Abdeckelement aufweist, das vor einem unkontrollierten Kraftangriff zuverlässig geschützt ist. Eine weitere Aufgabe der vorliegenden Erfindung wird darin gesehen, ein Nutzfahrzeug mit einer derartigen Abdeckelementanordnung vorzuschlagen.

Diese Aufgabe wird gelöst mit den Merkmalen der unabhängigen Patentansprüche. Vorteilhafte Ausgestaltungen sind Gegenstand der jeweils darauf rückbezogenen Unteransprüche.

Gemäß Anspruch 1 ist eine Abdeckelementanordnung an einem Frontend eines Fahrzeugs, insbesondere eines Nutzfahrzeuges und/oder insbesondere zur Abdeckung einer Wischeranlage, vorgesehen, die ein sich, vorzugsweise im Bereich unterhalb einer Frontscheibe, in Fahrzeugquerrichtung über das Frontend erstreckendes Abdeckelement aufweist, das mittels wenigstens eines Befestigungsmittels an einer Karosserie des Fahrzeugs, vorzugsweise lösbar, festgelegt ist. Weiter ist im Bereich des Abdeckelementes wenigstens ein Handgriff vorgesehen. Dieser wenigstens eine Handgriff ist mittels erfindungsgemäß wenigstens eines Befestigungsmittels, das durch eine abdeckelementseitige Durchgriffsöffnung hindurchgeführt ist, mittelbar oder unmittelbar mit der Karosserie verbunden.

Mit einem derartigen Handgriffelement wird auf einfache Weise ein Mittel zur Verfügung gestellt, mittels dem sich ein Fahrer zum Beispiel für Montage- und/oder Reinigungsarbeiten am höher gelegenen Frontendbereich, zum Beispiel im Scheibenbereich, einfach hochziehen kann, wobei die Krafteinleitung nicht in das Abdeckelement hinein, sondern durch die Anbindung an die Karosserie, in Letzere erfolgt. Dadurch kann es zu keinen unabsichtlichen Beschädigungen des Abdeckelementes mehr kommen.

An dieser Stelle sei ausdrücklich erwähnt, dass die Begrifflichkeit Handgriffelement hier ausdrücklich in einem weiten Sinne zu verstehen ist und jedwedes geeignete Griffelement sein kann.

Ein derartiger Handgriff, der vorzugsweise einer abdeckelementseitigen Griffmulde zugeordnet ist, weist bevorzugt eine U-Form auf, wobei jedem der U-Schenkel eine abdeckelementseitige Durchgriffsöffnung zugeordnet ist. Mit einem derartigen Griffaufbau ergibt sich eine besonders stabile Anbindung und damit Abstützungs- sowie Krafteinleitungsmöglichkeit in die Karosserie.

Besonders bevorzugt ist weiter eine Ausgestaltung, bei der jeder der U-Schenkel separat mittels wenigstens einen Befestigungsmittels mittelbar oder unmittelbar mit der Karosserie verbunden ist. Dies erhöht die konstruktive Flexibilität und erlaubt auf einfache Weise die gewünschte stabile Anbindung an der Karosserie.

Gemäß einer weiteren bevorzugten Ausgestaltung wird vorgeschlagen, dass das wenigstens eine Befestigungsmittel ein handgriffseitiges Durchgriffselement, insbesondere eine in den Handgriff integrierte Buchse, zum Beispiel eine Metallbuchse, aufweist, mit dem der Handgriff die abdeckelementseitige Durchgriffsöffnung durchgreift und sich mittelbar oder unmittelbar an der Karosserie abstützt. Eine derartige Ausgestaltung lässt sich einfach herstellen und ermöglicht zudem eine funktionssichere Montage des jeweiligen Handgriffs durch die abdeckelementseitige Durchgriffsöffnung hindurch.

Das Befestigungsmittel weist bevorzugt eine Befestigungsschraube auf oder ist durch eine solche gebildet. Mit einer Befestigungsschraube ist die Festlegung des Handgriffs an der Karosserie auf einfache und funktionssichere Weise möglich.

Konkret kann hier vorgesehen sein, dass die Befestigungsschraube durch das Durchgriffselement hindurchgeführt und mittelbar oder unmittelbar in die Karosserie eingeschraubt ist. Die Befestigungsschraube ist hier dann bevorzugt so ausgelegt und ausgebildet, dass diese im eingeschraubten Zustand das Durchgriffselement und damit den Handgriff an der Karosserie lagefixiert.

Die abdeckelementseitige Durchgriffsöffnung kann gemäß einer besonders bevorzugten Ausführungsform ein Übermaß gegenüber dem zugeordneten Befestigungsmittel, insbesondere gegenüber dem handgriffseitigen Durchgriffselement aufweisen. Damit wird auf einfache Weise sichergestellt, dass es bei Lageveränderungen des Abdeckelementes relativ zum Handgriff, zum Beispiel bei thermisch bedingten Ausdehnungen und Verschiebungen des Abdeckelementes im Bereich von deren Durchgriffsöffnung, zu keinen unerwünschten Verspannungen im Bereich des Durchgriffelementes bzw. im Bereich des Befestigungsmittels kommt.

Ein derartiger Handgriff liegt im an der Karosserie montierten Zustand bevorzugt an einem durchgrifföffnungsseitigen Randbereich des Abdeckelementes an, und zwar besonders bevorzugt wenigstens bereichsweise dicht an. Konkret kann hierzu vorgesehen sein, dass der Handgriff unter Zwischenschaltung eines Dichtelementes an dem Abdeckelement anliegt, insbesondere dergestalt anliegt, dass das Dichtelement wenigstens bereichsweise um die abdeckelementseitige Durchgriffsöffnung herum angeordnet ist und/oder dass das Dichtelement an einem freien Endbereich eines U-Schenkels eines U-förmig ausgebildeten Handgriffs wenigstens bereichsweise randseitig umlaufend angeordnet, insbesondere dort aufgesetzt ist. Hierdurch wird eine besonders zuverlässige Abdichtung dieses Anlagebereiches ermöglicht. Die Dichtelemente sind vorzugsweise vollständig randseitig umlaufend ausgebildet. Für den Fall jedoch, dass zum Beispiel im Bereich eines U-Schenkels eines Handgriffes ein Frontklappen-Scharnierelement, wie nachstehend noch näher erläutert vorgesehen sein sollte, kann das Dichtelement aber gegebenenfalls auch nicht vollständig randseitig umlaufend ausgebildet sein.

Des weiteren können in Fahrzeug-Querrichtung gesehen mehrere, voneinander beabstandete Handgriffe im Bereich des Abdeckelementes angeordnet sein. Alternativ oder zusätzlich kann vorgesehen sein, dass der wenigstens eine Handgriff im Bereich unterhalb eines Scheibenwischers angeordnet ist, was dann einen besonders einfachen Zugang zum Scheibenwischer ermöglicht.

Wie bereits zuvor ausgeführt, ist gemäß einer besonders bevorzugten Ausführungsform weiter vorgeschlagen, dass das Abdeckelement im Anlage- und Anbindungsbereich des wenigstens einen Handgriffs, insbesondere im Anlage- und Anbindungsbereich eines U-Schenkels eines U-förmigen Handgriffs, eine Scharnierausnehmung aufweist, durch die ein erster mittelbar oder unmittelbar mit der Karosserie verbundener Scharnierschenkel eines Frontklappen-Scharnierelementes von der Rückseite des Abdeckelementes her nach vorne in einen handgriffseitigen, insbesondere U-schenkelseitigen, Aufnahmebereich geführt ist, in dem der erste Scharnierschenkel mit einem mittelbar oder unmittelbar mit einer Frontklappe verbundenen zweiten Scharnierschenkel schwenkbar verbunden ist. Mit einem derartigen Aufbau lässt sich eine Frontklappen-Verschwenkung besonders vorteilhaft und designtechnisch hochwertig bewerkstelligen.

Besonders bevorzugt ist in diesem Zusammenhang eine Ausgestaltung, bei der der, vorzugsweise an der Rückseite der Frontklappe angebundene, zweite Scharnierschenkel mehrteilig ausgebildet ist, wobei bevorzugt vorgesehen ist, dass die einzelnen Scharnierschenkelteile mittels wenigstens einer einen Toleranzausgleich ermöglichenden Übermaßverbindung, insbesondere einer Langloch-Schraubverbindung, miteinander verbunden sind.

Zur Abschirmung des Frontklappen-Scharnierelementes kann weiter eine designtechnisch hochwertige und zusammen mit dem Frontklappen-Scharnierelement verschwenkbare Scharnier-Abdeckung vorgesehen sein, die mittels wenigstens eines Federelementes in der Abdeckposition gehalten ist. Konkret kann hier vorgesehen sein, dass sich die Scharnier-Abdeckung in Hochachsenrichtung gesehen einerseits frontklappenseitig abstützt, insbesondere einen oberen Frontklappen-Randbereich hintergreift, und sich andererseits mit dem abdeckungsseitig angeordneten Federelement an dem Frontklappen-Scharnierelement abstützt, insbesondere mit wenigstens einer Federnase in eine scharnierelementseitige Ausnehmung des zweiten Scharnierschenkels eingreift. Dadurch ergibt sich ein klapperfreier Aufbau und eine einfache Montage. Das Federelement weist zum Beispiel eine Ringform auf und ist mit der Scharnier-Abdeckung verbunden, zum Beispiel integral (materialeinheitlich und/oder einstückig) oder durch ein separates Bauteil gebildet. Ferner kann vorgesehen sein, dass die Scharnier-Abdeckung im montierten Zustand an dem zugeordneten Scharnierschenkel anliegt.

Bevorzugt kann weiter vorgesehen sein, dass der Handgriff so ausgebildet ist, dass dieser den ersten Scharnierschenkel wenigstens von oben her abdeckt und überdeckt, insbesondere auch vorne übergreift und abdeckt. Dadurch ergibt sich neben einer guten Abschirmung des Scharnierelementbereiches vor Verunreinigungen etc. auch eine designtechnisch hochwertige Ausführung, wobei bevorzugt vorgesehen ist, dass der erste Scharnierschenkel in Hochachsenrichtung gesehen in einer Anlageverbindung von unten her wenigstens bereichsweise am Handgriff anliegt.

Gemäß einer weiteren besonders bevorzugten Ausgestaltung wird vorgeschlagen, dass das Abdeckelement auf seiner, der Karosserie zugewandten Rückseite wenigstens einen Einhänge- und Positioniersteg aufweist, mittels dem das Abdeckelement an einer entsprechend zugeordneten karosserieseitigen Stegaufnahme einhängbar und positionierbar ist. Mit einer derartigen Einhänge- und Positionierverbindung wird eine besonders einfache Montage des Abdeckelementes, insbesondere eines Abdeckelementes zur Abdecklung einer Wischeranlage eines Fahrzeugs, bevorzugt eines Nutzfahrzeugs, möglich, da es eine derartige Einhänge- und Positionierverbindung dem Werker ermöglicht, das Abdeckelement in einem ersten Montageschritt einfach in die zugeordnete Stegaufnahme einzuhängen und dann für die gegebenenfalls weitere Befestigung entsprechend zu positionieren. Dies kann beispielsweise so erfolgen, dass das Abdeckelement nach dem Herstellen der Einhängeverbindung so weit nach unten gedrückt wird, bis eine gewünschte Endposition erreicht wird, bei der zum Beispiel Schraublöcher oder dergleichen für eine weitere Festlegung und Befestigung des Abdeckelementes fluchtend ausgerichtet sind. Das heißt, dass nach einer derartigen Vorpositionierung mittels der Einhänge- und Positionierverbindung in einem weiteren Verfahrensschritt auf besonders einfache Weise eine Festlegung des Abdeckelementes erfolgen kann, in dem zum Beispiel untere randseitige Festlegungen und/oder seitliche randseitige Festlegungen vorgenommen werden.

Besonders bevorzugt ist eine Ausgestaltung, bei der der Einhänge- und Positioniersteg mit wenigstens einem Dichtelement versehen ist, so dass der Einhänge- und Positioniersteg im in der Stegaufnahme aufgenommenen Zustand dicht an der Frontscheibe anliegt. Dadurch wird auf besonders einfache Weise eine funktionssichere und zuverlässige Abdichtung des unter dem Abdeckelement liegenden Bereiches vor Nässe erzielt. Der ohnehin vorzusehende Einhänge- und Positioniersteg wird somit in einer vorteilhaften Doppelfunktion hier weiter auch als Aufnahmeelement für ein Dichtelement verwendet.

Ein derartiger Einhänge- und Positioniersteg kann grundsätzlich auf verschiedene Art und Weise ausgebildet werden, so zum Beispiel durch eine an der Rückseite des Abdeckelementes ausgebildete oder dort festgelegte Stegleiste oder dergleichen. Besonders bevorzugt und einfach ist jedoch ein Aufbau, bei dem der wenigstens eine Einhänge- und Positioniersteg durch eine Umbiegung eines im Fahrzeug-Hochachsenrichtung gesehenen oberen Randbereiches des Abdeckelementes gebildet ist. Alternativ oder zusätzlich dazu kann vorgesehen sein, dass ein sich wenigstens bereichsweise oder abschnittsweise über die Länge des Abdeckelementes erstreckender Einhänge- und Positioniersteg ausgebildet ist, wobei aus fertigungstechnischen Gründen besonders bevorzugt eine Ausgestaltung ist, bei der ein einziges, sich über die gesamte Länge des Abdeckelementes erstreckender Einhänge- und Positioniersteg vorgesehen ist.

Auch die Stegaufnahme kann grundsätzlich auf unterschiedliche Weise ausgebildet sein. Gemäß einer konkreten Ausgestaltung ist vorgesehen, dass die Stegaufnahme durch wenigstens eine karosserieseitige, insbesondere an der Karosserie festgelegte, und sich in Fahrzeug-Hochachsenrichtung nach oben über einen unteren Scheibenrandbereich erstreckende Aufnahmeleiste gebildet ist, die zwischen sich und der Frontscheibe einen, den Einhänge- und Positioniersteg aufnehmenden Montage- und Aufnahmeraum ausbildet. Mit einer derartigen Stegaufnahme wird das Einfädeln des Einhänge- und Positionierstegs für eine einfache Montage wesentlich erleichtert.

In diesem Zusammenhang ist eine Ausgestaltung vorteilhaft, bei der die wenigstens eine Aufnahmeleiste durch eine wenigstens bereichsweise elastisch rückfedernd ausgebildete Federleiste gebildet ist, die den, vorzugsweise mit einem Dichtelement versehenen, Einhänge- und Positioniersteg mit einer definierten Vorspannkraft an die Frontscheibe anpresst und/oder die das Abdeckelement in einer gewünschten Montageposition hält. Mit derartigen konkreten Ausgestaltungen wird eine besonders vorteilhafte Anbindung des Abdeckelementes erzielt, die auch für die nachfolgenden Montageschritte eine wesentliche Erleichterung darstellt.

Grundsätzlich kann eine einzige Aufnahmeleiste vorgesehen werden. Bevorzugt sind jedoch mehrere, in Fahrzeugquerrichtung voneinander beabstandete Aufnahmeleisten vorgesehen, wodurch sich eine erhöhte Flexibilität in Verbindung mit der Anordnung weiterer Bauteile, Halter, etc. ergibt. Die wenigstens eine Aufnahmeleiste kann grundsätzlich integral mit der Karosserie bzw. dem Rohbau ausgebildet sein. Bevorzugt ist jedoch die Aufnahmeleiste durch ein separates Bauteil gebildet, das zum Beispiel mittels wenigstens einer Schraubverbindung an der Karosserie festgelegt ist.

Wie bereits zuvor ausgeführt, kann gemäß einer besonders bevorzugten Ausgestaltungsvariante vorgesehen werden, dass der wenigstens eine Einhänge- und Positioniersteg und/oder die Stegaufnahme so ausgebildet ist bzw. sind, dass das Abdeckelement bei in der Stegaufnahme eingehängtem und positioniertem Einhänge- und Positioniersteg so ausgerichtet bzw. positioniert ist, dass wenigstens ein abdeckelementseitiges Befestigungselement mit einem zugeordneten karosserieseitigen oder an der Karosserie festlegbaren Gegenelement fluchtet bzw. zusammenwirkt. Letzteres ist insbesondere in Verbindung mit fluchtenden Schraublöchern einer Schraubverbindung von Vorteil. Mit einer derartigen Maßnahme ergibt sich somit eine wesentliche Montagevereinfachung, da dann vom Werker lediglich noch die entsprechenden Befestigungsmittel, zum Beispiel Befestigungsschrauben in die bereits fluchtend ausgerichteten Schraublöcher eingeschraubt werden müssen.

Gemäß einer weiteren, besonders bevorzugten Ausgestaltung ist vorgesehen, dass das Abdeckelement im montierten Zustand mit einem in Fahrzeug-Hochachsenrichtung unteren Randbereich, unter Zwischenschaltung eines Dichtelementes dicht an einem angrenzenden Frontend-Bauteil, insbesondere an einer Frontklappe und/oder bevorzugt an einer Rückseite des angrenzenden Frontend-Bauteils, anliegt. Mit einem derartigen Aufbau lässt sich somit in einer vorteilhaften Doppelfunktion der untere Randbereich des Abdeckelements gleichzeitig zur Festlegung eines Dichtelementes verwenden und somit eine zuverlässige Abdichtung zu einem angrenzenden Frontend-Bauteil sicherstellen, insbesondere zu einer Frontklappe des Frontends sicherstellen. Ein derartiges Dichtelement kann zudem in einer weiteren Doppelfunktion auch als Klapperschutz dienen, da es einen Puffer zwischen dem angrenzenden Bauteil und dem Abdeckelement ausbildet, was insbesondere bei einer schwenkbar angelenkten Frontklappe von Vorteil sein kann.

Wie bereits zuvor erwähnt, kann das Abdeckelement gemäß einer besonders bevorzugten Ausgestaltung zusätzlich zur wenigstens einen Einhänge- und Positionierverbindung, die bevorzugt am oberen Randbereich des Abdeckelementes angeordnet ist, weitere Befestigungsmöglichkeiten des Abdeckelementes im unteren und/oder seitlichen Randbereich des Abdeckelementes vorsehen, um eine sichere Festlegung und Positionierung des Abdeckelementes am Frontend des Fahrzeugs sicherzustellen. Hierzu wird gemäß einer ersten Ausführungsform vorgeschlagen, dass das Abdeckelement am im Fahrzeug-Hochachsenrichtung unteren Randbereich wenigstens eine Befestigungsstelle, vorzugsweise mehrere in Längsrichtung des Abdeckelementes voneinander beabstandete Befestigungsstellen aufweist, an der das Abdeckelement mittels einer form- und/oder kraftschlüssigen Verbindung, insbesondere mittels einer Schraubverbindung, mittelbar oder unmittelbar an der Karosserie festgelegt ist. Die wenigstens eine Befestigungsstelle kann bei einer derartigen Ausgestaltung weiter in Fahrzeug-Hochachsenrichtung gesehen unterhalb der Dichtlinie zwischen Abdeckelement und nach unten abgrenzenden Frontend-Bauteil angeordnet sein, um eine zuverlässige Abdichtung nach unten hin sicherzustellen.

Weiter kann vorgesehen sein, dass wenigstens eine, in einem unteren Randbereich, vorzugsweise in einem mittleren unteren Randbereich, des Abdeckelementes vorgesehene Befestigungsstelle einem karosserieseitig angeordneten oder ausgebildeten Halter zugeordnet ist, der einen elastisch rückfedernden, der abdeckelementseitigen Befestigungsstelle zugeordneten freien Endbereich als Anbindungsbereich aufweist und/oder der an der Karosserie und/oder an einem Filtergehäuse des Fahrzeugs festgelegt ist. Eine derartige Festlegung über einen Halter erlaubt eine gewisse Elastizität und damit einen gewissen Toleranzausgleich in Verbindung mit der Anbindung des Abdeckelements im unteren Randbereich. Zudem wird hierdurch die konstruktive Flexibilität wesentlich erhöht. Bei einer Abstützung an einem Filtergehäuse kann dieses Filtergehäuse in einer vorteilhaften Doppelfunktion zur flächigen Auflage und Abstützung des Halters verwendet werden.

Gemäß einer weiteren bevorzugten Ausgestaltung kann das Abdeckelement an in Fahrzeugquerrichtung gegenüberliegenden seitlichen Randbereichen mittelbar oder unmittelbar mittels einer, einen Toleranzausgleich ermöglichenden Übermaßverbindung an der Karosserie festgelegt sein. Eine derartige Übermaßverbindung ermöglicht insbesondere eine Längsausdehnungsmöglichkeit des Abdeckelementes, insbesondere bei thermisch bedingten Längenausdehnungen des Abdeckelementes, und hilft daher Spannungen im Bereich des Abdeckelementes und damit eine unnötige Beaufschlagung der Verbindungs- bzw. Befestigungsstellen zu vermeiden. Ein derartiger Längenausgleich ist insbesondere an den seitlichen Randbereichen des Abdeckelementes vorteilhaft, da insbesondere dort thermisch bedingte Längenausdehnungen auftreten können. Eine Ausdehnungsmöglichkeit in Fahrzeug-Hochachsenrichtung ist weniger kritisch, kann aber selbstverständlich ebenfalls vorgesehen sein.

Gemäß einer konkreten Ausgestaltung hierzu wird vorgeschlagen, dass die Übermaßverbindung, insbesondere eine Langlochverbindung, eine abdeckelementseitige Übermaß-Ausnehmung, insbesondere ein Langloch, aufweist, die in Fahrzeug-Querrichtung und/oder in Fahrzeug-Hochachsenrichtung ein Übermaß gegenüber einem Schraubenschaft einer Befestigungsschraube aufweist, mittels der das Abdeckelement in den seitlichen Randbereichen festgelegt wird.

Gemäß einer weiteren besonders bevorzugten Ausgestaltung kann vorgesehen sein, dass die seitlichen Randbereiche des Abdeckelementes einen Randbereich eines zugeordneten A-Säulen-Verkleidungsteils überdecken oder bevorzugt untergreifen, wobei das A-Säulen-Verkleidungsteil mittels der jeweiligen Befestigungsschraube der Übermaßverbindung festgelegt ist. Die Festlegung erfolgt insbesondere so, dass das eine Durchtrittsöffnung aufweisende A-Säulen-Verkleidungsteil zwischen einem Schraubenkopf der Befestigungsschraube und einem Randbereich der Übermaß-Ausnehmung verklemmt ist, insbesondere die Übermaß-Ausnehmung abdichtend verklemmt ist.

Das Abdeckelement kann an den seitlichen Randbereichen direkt an die Karosserie bzw. den Rohbau angebunden werden. Das Abdeckelement kann jedoch auch an den in Fahrzeugquerrichtung gegenüberliegenden seitlichen Randbereichen mittelbar unter Zwischenschaltung einer Befestigungskonsole, die dann an der Karosserie festgelegt ist, mit der Karosserie verbunden sein. Dadurch erhöhen sich die konstruktiven Freiheiten und kann die Befestigungskonsole gegebenenfalls zur Festlegung weiterer Bauteile Verwendung finden.

Zur dichten Anbindung der Wischerarme im Bereich des Abdeckelementes wird vorgeschlagen, dass das Abdeckelement wenigstens eine Aufnahmeöffnung aufweist, durch die eine Wischerachse eines Wischerarmes hindurchgeführt ist, wobei in die Aufnahmeöffnung ein die Wischerachse dicht umschließender Dichtring, der vorzugsweise aus einem Elastomermaterial hergestellt ist, eingesetzt ist. Gemäß einer hierzu bevorzugten beispielhaften konkreten Ausgestaltung wird vorgeschlagen, dass der Dichtring mit umfangsseitig voneinander beabstandeten Raststegen einen Öffnungsrandbereich der Aufnahmeöffnung formschlüssig hintergreift und/oder mit einem ringförmig geschlossenen Ringbund die Wischerachse dicht umschließt. Die Dichtringe werden bevorzugt vor der Montage des Abdeckelementes in die Aufnahmeöffnungen eingesetzt bzw. eingeclipst. Beim Montieren des Abdeckelementes tauchen dann die fahrzeugseitig angeordneten Wischerachsen durch die Dichtringe durch und werden von diesen dicht umgriffen bzw. umschlossen. Nach der Montage des Abdeckelementes werden dann die Wischerarme auf die jeweiligen Wischerachsen gesteckt und zum Beispiel fest mit diesen verschraubt.

Die sich mit dem erfindungsgemäßen Nutzfahrzeug ergebenden Vorteile wurden bereits zuvor ausführlich in Verbindung mit der Würdigung der Abdeckelementanordnung dargelegt, so dass diesbezüglich zur Vermeidung von Wiederholungen auf die zuvor gemachten Ausführungen verwiesen wird.

Die Erfindung wird nachfolgend anhand einer Zeichnung näher erläutert.

Es zeigen:
- Fig. 1: schematisch eine perspektivische Explosionsdarstellung einer beispielhaften Ausführungsform einer erfindungsgemäßen Abdeckelementanordnung,
- Fig. 2: einen schematischen Querschnitt durch das Abdeckelement gemäß Fig. 1 im Bereich eines Einhänge- und Positionierstegs, der in eine karosserieseitige Stegaufnahme eingesetzt ist,
- Fig. 3a: schematisch eine vergrößerte Vorder- und Detailansicht des Abdeckelementes gemäß Fig. 1 in einem mittleren Bereich,
- Fig. 3b: schematisch eine vergrößerte, perspektivische Detailansicht der karosserieseitigen Halterungen zur Anbindung eines unteren Abdeckelement-Randbereiches,
- Fig. 4: schematisch einen Querschnitt durch das Abdeckelement gemäß Fig. 1 im Bereich der unteren Befestigungsstellen des Abdeckelementes (Schnitt A-A gemäß Fig. 3a bei montiertem Abdeckelement),
- Fig. 5: schematisch eine vergrößerte, perspektivische Detailansicht eines seitlichen Abdeckelement-Randbereichs mitsamt zugeordneter Befestigungskonsole,
- Fig. 6: schematisch einen Längsquerschnitt durch die Befestigungskonsole im Bereich des seitlichen Randabschnittes des Abdeckelementes,
- Fig. 7: schematisch eine vergrößerte, perspektivische Detailansicht eines Handgriffs mitsamt zugeordnetem Anbindungsbereich am Abdeckelement,
- Fig. 8a: schematisch einen Längsquerschnitt entlang der Linie C-C der Fig. 7,
- Fig. 8b: ein vergrößertes Detail der Schnittdarstellung gemäß Fig. 8a, und
- Fig. 9a: schematisch eine perspektivische Ansicht eines in eine Aufnahmeöffnung für einen Wischerarm einsetzbaren Dichtringes,
- Fig. 9b: schematisch eine Seitenansicht des Dichtrings,
- Fig. 9c: schematisch eine Schnittansicht entlang der Linie D-D der Fig. 9b,
- Fig. 9d: schematisch einen Querschnitt durch den montierten Dichtring,
- Fig. 10a: schematisch einen Schnitt entlang der Linie E-E der Fig. 7 im montierten Zustand,
- Fig. 10b: schematisch eine perspektivische Ansicht der Abdeckung mitsamt Federelement,
- Fig. 10c: schematisch eine Detailansicht im montierten Zustand mit eingesetzter Scharnier-Abdeckung, und
- Fig. 11: schematisch eine Frontansicht eines Nutzfahrzeugs mit im Wesentlichen ebener Frontendausgestaltung gemäß dem Stand der Technik.

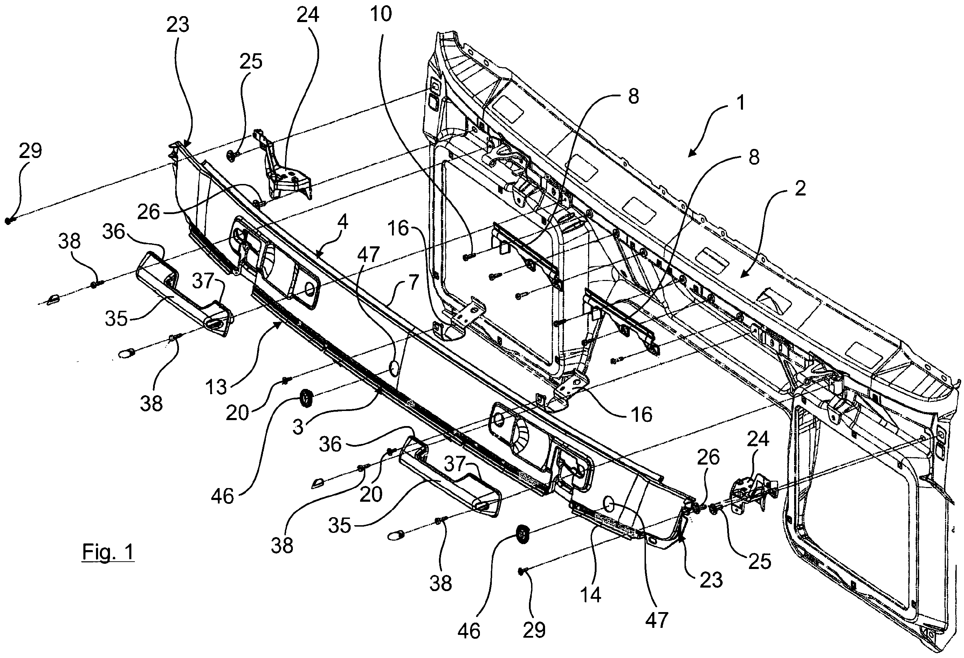

In der Fig. 1 ist schematisch und beispielhaft eine perspektivische Darstellung einer möglichen Ausführungsform einer erfindungsgemäßen Abdeckelementanordnung 1 in einer Explosionsdarstellung gezeigt. Konkret ist hier ein Teil einer Karosserie 2 sowie eine sich im Sinne des Abdeckelementes 104 der Fig. 11 unterhalb einer Frontscheibe in Fahrzeugquerrichtung zwischen gegenüberliegenden A-Säulenbereichen über ein Frontend erstreckendes Abdeckelement 3 vorgesehen, das in nachfolgend noch näher beschriebener Weise an der Karosserie 2 lösbar festgelegt wird.

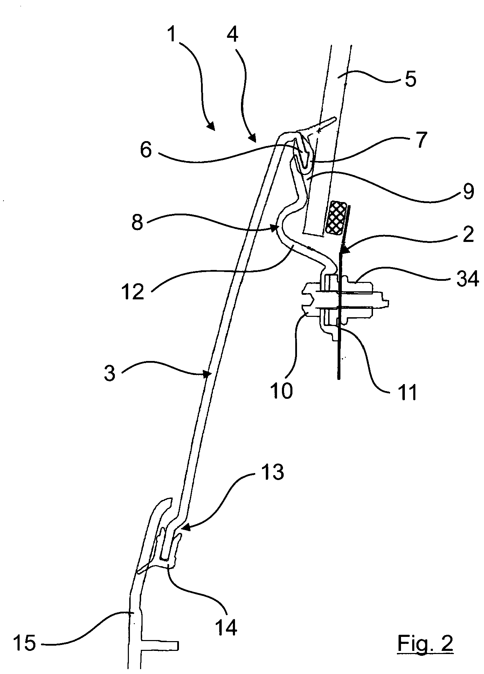

Wie dies insbesondere aus der Fig. 2 ersichtlich ist, ist das Abdeckelement 3 an einem in Fahrzeug-Hochachsenrichtung z oberen Randbereich 4 mit einer nach rückwärts in Richtung einer Frontscheibe 5 gerichteten Umbiegung versehen, die einen sich bevorzugt im Wesentlichen über die gesamte Länge des Abdeckelementes 3 erstreckenden Einhänge- und Positioniersteg 6 ausbildet, auf den ein Dichtelement 7 aufgesteckt ist. Dieser mit einem Dichtelement versehene Einhänge- und Positioniersteg 6 des Abdeckelementes 3 wird in einem ersten Montageschritt in eine hier durch mehrere, in Fahrzeug-Querrichtung y voneinander beabstandete Federleisten 8 (siehe Fig. 1) gebildete Stegaufnahme bzw. in einen Montage- und Aufnahmeraum 9, der zwischen der Frontscheibe 5 und einem freien Ende der Federleisten 8 ausgebildet ist, eingehängt bzw. positioniert und dann so nach unten gedrückt, dass die Federleisten 8 das Dichtelement und damit den Einhänge- und Positioniersteg 6 mit einer definierten Vorspannung an die Frontscheibe 5 anpressen. Die Federleisten 8 sind hier durch separate Bauteile gebildet, die mittels Schraubverbindungen 10 an definierten Positionen der Rohbau-Karosserie 2, vorzugsweise im mittleren Bereich, bezogen auf die Fahrzeugquerrichtung, des Abdeckelementes 3 angebunden sind. Diese Federleisten 8 erstrecken sich von ihren karosserieseitigen Anbindungsstellen 11 ausgehend mit einer Federausbauchung 12 so weit nach oben, dass sie einen unteren Scheibenrandbereich übergreifen und dort dann wieder so abgewinkelt sind, dass sie den Montage- und Aufnahmeraum 9 ausbilden, in den der Einhänge- und Positioniersteg 6 mitsamt Dichtelement 7 eingesteckt wird.

Wie dies der Fig. 2 weiter zu entnehmen ist, ist am in Fahrzeug-Hochachsenrichtung z unteren Randbereich 13 des Abdeckelementes 3 ein weiteres Dichtelement 14 vorgesehen, über das das Abdeckelement 3, eine sich daran nach unten hin anschließende Frontklappe 15 hintergreifend, dicht an dieser Frontklappe 15 anliegt.

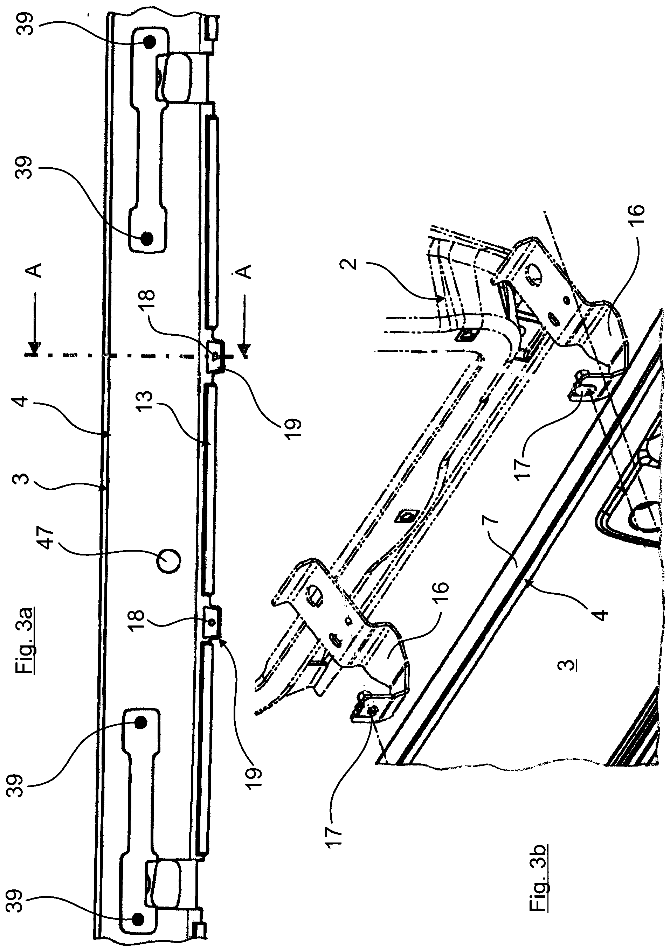

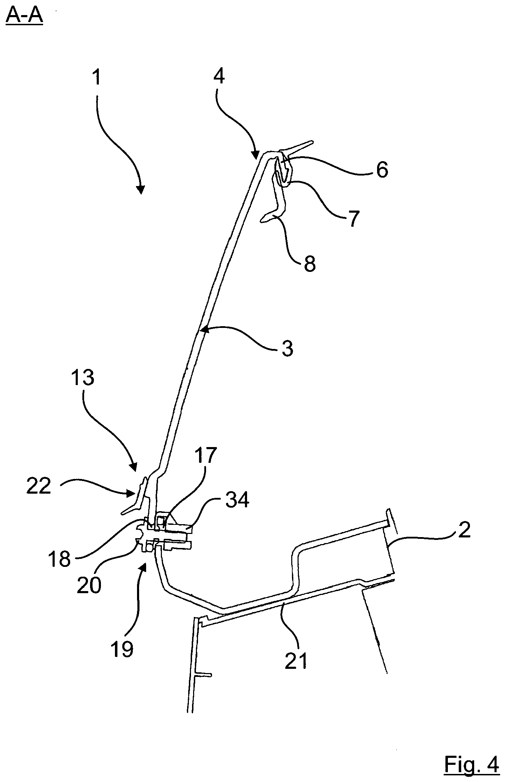

Nach dem ersten Montageschritt des Einhängens und Positionierens des Abdeckelementes 3 über die durch den Einhänge- und Positioniersteg 6, das Dichtelement 7 und die Federleisten 8 gebildete Einhänge- und Positionierverbindung erfolgt, wie in den Fig. 3a, 3b und 4 dargestellt, die Festlegung des unteren Randbereichs 13 des Abdeckelementes 3 an karosserieseitig angebundenen Haltern 16. Nach dem ersten Montageschritt liegen hierzu die Schraublöcher 17 (mit einem Muttergewinde versehen) der Halter 16 bevorzugt in einer Flucht mit den zugeordneten Durchschraublöchern 18 von den Haltern 16 zugeordneten Befestigungsstellen 19 des Abdeckelementes bzw. werden die Durchschraublöcher 18 in eine Flucht mit den Schraublöchern 17 gebracht, so dass anschließend die in der Fig. 4 gezeigte Befestigungsschraube 20 eingeschraubt werden kann und dementsprechend der untere Randbereich 13 des Abdeckelementes 3 im, bezogen auf die Fahrzeug-Querrichtung y, mittleren Bereich zuverlässig festgelegt werden kann, um dort eine saubere Positionierung zwischen den nachfolgend noch näher erläuterten Handgriffen zu erzielen.

Wie insbesondere aus der Fig. 3b und Fig. 4 ersichtlich ist, sind die Halter mit ihren freien Endbereichen elastisch rückfedernd ausgebildet, wobei die Halter 16 an der Karosserie 2 und/oder an einem Filtergehäuse 21 abgestützt bzw. festgelegt werden können. Wie aus der Fig. 4 weiter ersichtlich ist, liegt die Dichtlinie 22, gebildet durch das Dichtelement 14, hier bevorzugt oberhalb der Befestigungsstellen 19.

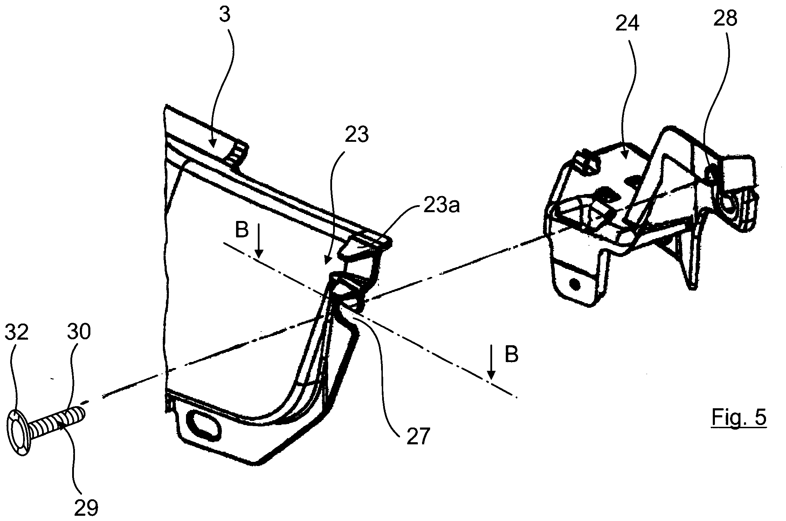

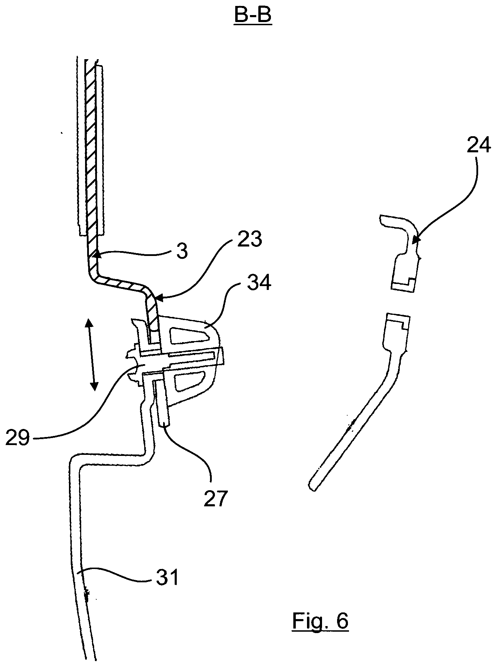

Wie dies weiter aus der Zusammenschau der Fig. 5 und 6 ersichtlich ist, sind die seitlichen Randbereiche 23 des Abdeckelementes 3 unter Zwischenschaltung von Befestigungskonsolen 24, die über Schraubverbindungen 25, 26 an der Rohbau-Karosserie festgelegt sind, an letzterer mittelbar festgelegt. Um einen insbesondere thermischen Längsausgleich des bevorzugt aus einem Kunststoffmaterial hergestellten Abdeckelementes 3 zu ermöglichen, erfolgt die Anbindung des Abdeckelementes 3 in den seitlichen Randbereichen 23 mittels einer einen Toleranzausgleich ermöglichenden Übermaßverbindung, die hier konkret durch eine Langlochverbindung ausgebildet ist. Diese Langlochverbindung weist eine randseitige Langlochausnehmung 27 auf, der (Fig. 5) eine befestigungskonsolenseitige Einschraubstelle 28 zugeordnet ist. In diese Einschraubstelle 28 der Befestigungskonsole 24 kann eine Befestigungsschraube 29 eingeschraubt werden. Die randseitige Langlochausnehmung 27 ist hier so ausgebildet, dass diese zumindest in Fahrzeug-Querrichtung y, gegebenenfalls auch in Fahrzeug-Hochachsenrichtung z ein definiertes Übermaß gegenüber einem Schraubenschaft 30 der Befestigungsschraube 29 aufweist. Dadurch ist ein Längenausdehnungsausgleich des Abdeckelements 3 wenigstens in Fahrzeug-Querrichtung y möglich.

Wie aus der Fig. 6 weiter ersichtlich, kann in diesen seitlichen Randbereichen 23 des Abdeckelements 3 ferner vorgesehen sein, dass diese seitlichen Randbereiche 23 einen Randbereich eines zugeordneten A-Säulen-Verkleidungsteils 31 untergreifen, wobei das A-Säulen-Verkleidungsteil 31 mittels der jeweils zugeordneten Befestigungsschraube 29 der Übermaßverbindung so festgelegt wird, dass ein Schraubenkopf 32 der Befestigungsschraube 29 den eine Schraubendurchgangsöffnung 33 im A-Säulen-Verkleidungsteil 31 aufweisenden Randbereich zwischen sich und einem Randbereich der Langlochausnehmung 27 verklemmt. Der Darstellung der Fig. 6 ist weiter sehr gut zu entnehmen, dass, wie bei allen beschriebenen Schraubverbindungen, im Bereich der Einschraubstelle bzw. des Einschraublochs eine Gewindemutter 34 vorgesehen ist, in die die jeweilige Befestigungsschraube eingeschraubt wird.

Weiter ist in der Fig.5 schematisch und beispielhaft ein, hier durch eine abdeckelementseitige Nase gebildetes Abstandelement 23a gezeigt, das im montierten Zustand von hinten her am A-Säulen-Verkleidungsteil 31 anliegt bzw. sich dort abstützt und somit ein genau definiertes Fugenmaß zwischen A-Säulen-Verkleidungsteil 31 und Abdeckelement 3 ermöglicht. Das hier beispielhaft in der Art eines nasenartigen Vorsprungs gestaltete Abstandelement 23a ist bevorzugt abdeckelementseitig ausgebildet und/oder angeordnet, kann aber ggf. auch in äquivalenter Form an der dem Abdeckelement 3 zugewandten Rückseite des A-Säulen-Verkleidungsteiles 31 angeordnet sein.

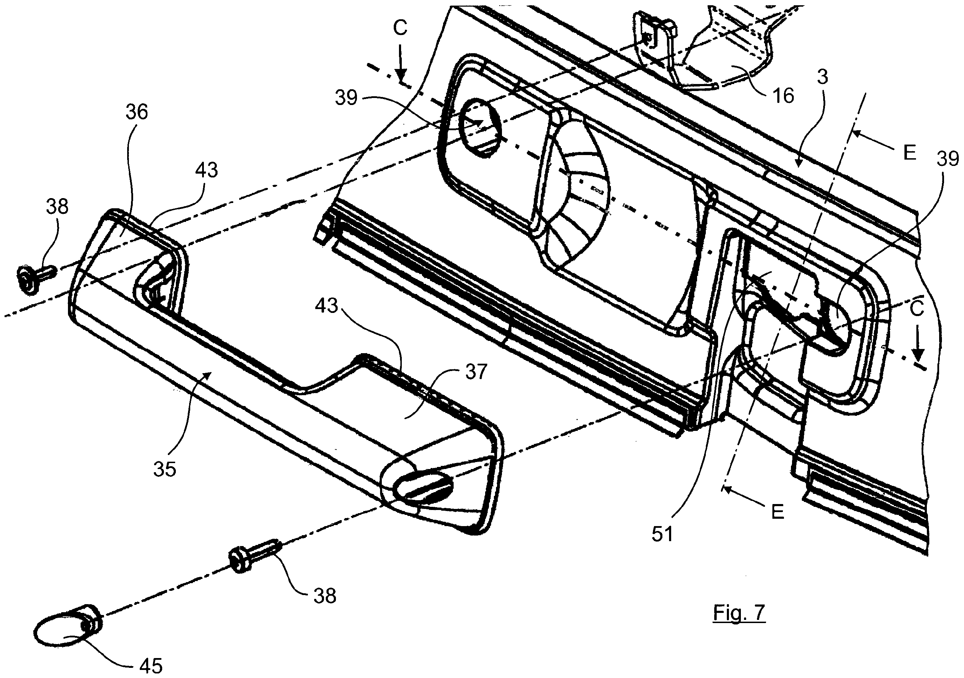

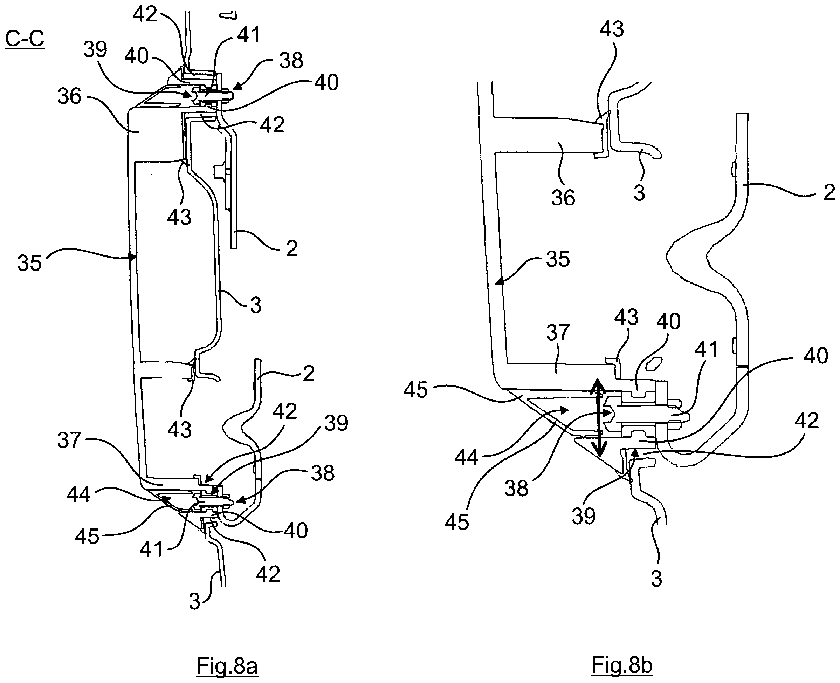

Wie dies weiter in Verbindung mit den Fig. 7, 8a und 8b dargestellt ist, werden in einem letzten Montageschritt nunmehr zwei im Bereich des Abdeckelementes 3 in Fahrzeugquerrichtung voneinander beabstandete Handgriffe 35 montiert, die jeweils eine U-Form mit zwei U-Schenkeln 36, 37 aufweisen. Im Bereich der U-Schenkel 36, 37 ist jeweils eine Schraubverbindung 38 vorgesehen, über die die Handgriffe 35 durch eine abdeckelementseitige Durchgriffsöffnung 39 hindurch unmittelbar bzw. mittelbar mit der Karosserie 2 kraftleitend bzw. kraftabstützend verbunden werden. Wie dies insbesondere aus den Fig. 8a und 8b ersichtlich ist, durchgreift dabei jeweils ein schenkelseitiges Durchgriffselement 40 die abdeckelementseitige Durchgriffsöffnung 39 dergestalt, dass sich das Durchgriffselement 40 karosserieseitig in einer Anlageverbindung abstützt und dann dort mittels der Befestigungsschrauben 41 der schenkelseitigen Schraubverbindungen 38 festgelegt ist.

Wie dies weiter insbesondere aus der Zusammenschau der Fig. 8a und 8b ersichtlich ist, weisen die den jeweiligen Durchgriffselementen 40 der U-Schenkel 36, 37 der Handgriffe 35 zugeordneten Durchgriffsöffnungen 39 ein Übermaß 42 bzw. ein definiertes Spaltmaß gegenüber diesem auf, wodurch sichergestellt ist, dass sich das Abdeckelement 3 bei Längenausdehnungen, insbesondere bei thermisch bedingten Längenausdehnungen, in einem definierten Maße relativ zu den Handgriffen 35 bzw. deren Durchgriffselementen 40 bewegen kann und es somit in diesem Bereich, analog zu den seitlichen Randbereichen 23 mit dortigen Übermaßverbindungen zu keinen Verspannungen kommen kann.

Wie dies weiter den Fig. 7, 8a und 8b entnommen werden kann, sind an den freien Endseiten der U-Schenkel 36, 37 Dichtelemente 43 vorgesehen bzw. aufgesetzt, die bei montierten Handgriffen 35 in einer dichten Anlageverbindung um die jeweiligen abdeckelementseitigen Durchgriffsöffnungen 39 herum am Abdeckelement 3 anliegend und diese Durchgriffsöffnungen 39 zuverlässig abdichten. Die Durchgriffselemente 40 können zum Beispiel durch in den vorzugsweise aus einem Kunststoffmaterial hergestellten Handgriff 35 integrierte Buchsen, zum Beispiel Metallbuchsen gebildet sein. Die Metallbuchsen können bei der Herstellung des Handgriffs 35 eingesetzt oder auch eingespritzt werden.

Durch die Anbindung der Handgriffe 35 an der Rohbau-Karosserie 2 ist sichergestellt, dass, zum Beispiel bei einem Hochziehen an einem derartigen Handgriff 35 die Krafteinleitung nicht über das Abdeckelement 3 sondern direkt über die Karosserie 2 erfolgt und es somit zu keinen Beschädigungen bzw. einem Ausreißen der üblichen Abdeckelement-Verbindungen mit der Karosserie 2 kommen kann, die somit hier nicht kraftabstützend ausgelegt werden müssen, sondern einfach und funktionsgemäß dimensioniert werden können. Über die nicht kraftabstützende Anlage der Handgriffe an dem Abdeckelement 3 wird lediglich die Dichtigkeit hergestellt.

In die griffschenkelseitigen Durchschrauböffnungen 44 sind zudem nach Herstellen der Schraubverbindung Dichtkappen 45 eingesetzt.

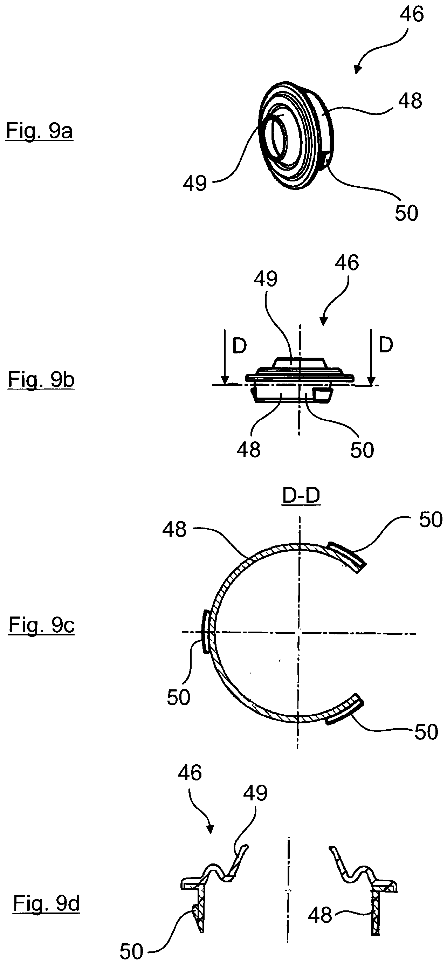

Wie dies weiter aus der Fig. 1 in Verbindung mit den Fig. 9a bis 9d ersichtlich ist, weist das Abdeckelement 3 Aufnahmeöffnungen 47 auf, durch die hier nicht dargestellte fahrzeugseitig angeordnete Wischerachsen von Wischerarmen hindurchgeführt werden können. Zur Abdichtung werden Dichtringe 46, die vorzugsweise aus einem Elastomermaterial hergestellt sind, in die Aufnahmeöffnungen 47 eingeclipst. Hierzu weisen die Dichtringe 46 an einem hier lediglich beispielhaft nicht vollständig ringförmig geschlossenem, sondern teilweise offen ausgebildetem Montagebund 48 voneinander beabstandete Raststege 50 auf, die einen Öffnungsrandbereich der Aufnahmeöffnungen 47 im eingesetzten Zustand (Fig. 9d) formschlüssig hintergreifen. An den Montagebund 48 schließt sich jeweils ein hier ringförmig geschlossener Ringbund 49 an, der hier beispielhaft über das Abdeckelement 3 vorsteht und die nicht dargestellte Wischerachse dicht umschließt.

Die Dichtringe 46 werden bevorzugt vor der Montage des Abdeckelementes 3 in die Aufnahmeöffnungen 47 eingesetzt bzw. eingeclipst. Beim Montieren des Abdeckelementes 3 tauchen dann die fahrzeugseitig angeordneten Wischerachsen durch die Dichtringe 46 durch und werden von diesen dicht umgriffen bzw. umschlossen. Nach der Montage des Abdeckelementes 3 werden dann die Wischerarme auf die jeweiligen Wischerachsen gesteckt und zum Beispiel fest mit diesen verschraubt.

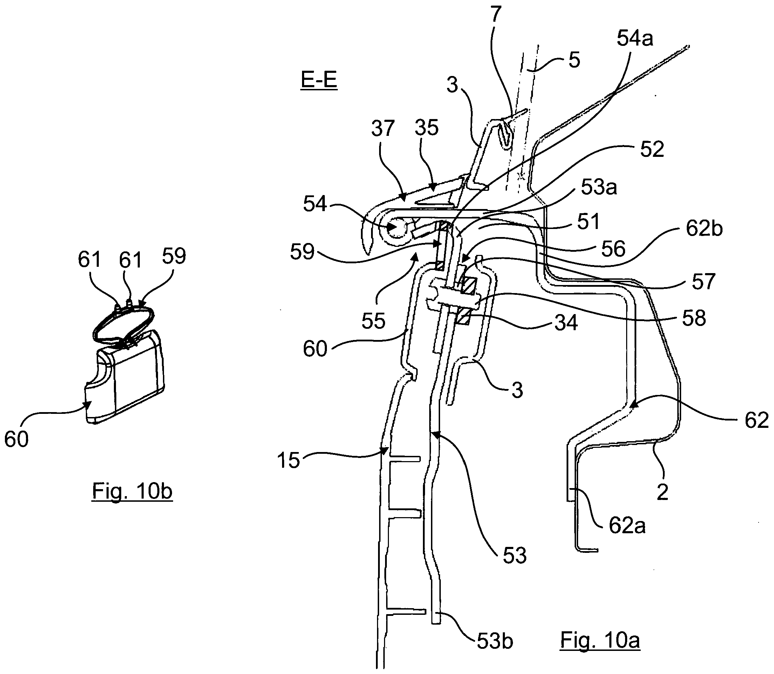

In Fig. 10a ist weiter schematisch eine Schnittansicht entlang der Linie E-E der Fig. 7 im montierten Zustand des Handgriffs 35 gezeigt.

Das Abdeckelement 3 weist im Anlage- und Anbindungsbereich des U-Schenkels 37 des Handgriffs 35 eine Scharnierausnehmung 51 auf, durch die ein erster, hier beispielhaft unmittelbar mit der Karosserie 2 verbundener Scharnierschenkel 52 eines Frontklappen-Scharnierelementes 54 von der Rückseite des Abdeckelementes 3 her nach vorne in einen handgriffsseitigen, U-schenkelseitigen Aufnahmebereich 55 geführt ist, in dem der erste Scharnierschenkel 52 mit einem hier ebenfalls beispielhaft unmittelbar mit der Frontklappe 15 verbundenen zweiten Scharnierschenkel 53 schwenkbar verbunden ist. Die Schwenkverbindung der beiden Scharnierschenkel 52, 53 kann hier auf an sich bekannte Weise erfolgen, zum Beispiel unter Einschluss einer Bolzenfeder.

Der an der Rückseite der Frontklappe 15 angebundene zweite Scharnierschenkel 53 ist hier beispielhaft zweiteilig ausgebildet, wobei die beiden Scharnierschenkelteile 53a und 53b mittels einer einen Toleranzausgleich ermöglichenden Übermaßverbindung 56 miteinander verbunden sind. Konkret umfasst diese Übermaßverbindung 56 im Scharnierschenkelteil 53b eine Übermaß-Ausnehmung 57, zum Beispiel ein Langloch, die ein Übermaß gegenüber dem Schraubenschaft einer Befestigungsschraube 58 aufweist. Beim Einschrauben der Befestigungsschraube 58 in die Gewindemutter 34 des zweiten Scharnierschenkelteils 53b kann somit im Rahmen des vorgegebenen Übermaßes eine relative Lageveränderung zwischen den beiden Scharnierschenkelteilen 53a und 53b vorgenommen werden.

Zur Abschirmung des Frontklappen-Scharnierelementes 54 ist weiter eine Scharnier-Abdeckung 60 vorgesehen, die beispielhaft und perspektivisch in der Fig. 10b dargestellt ist. Diese Scharnier-Abdeckung 60 ist mit einem hier ringförmigen Federelement 59 verbunden, das an seiner freien Oberseite hier beispielhaft zwei Federnasen 61 aufweist.

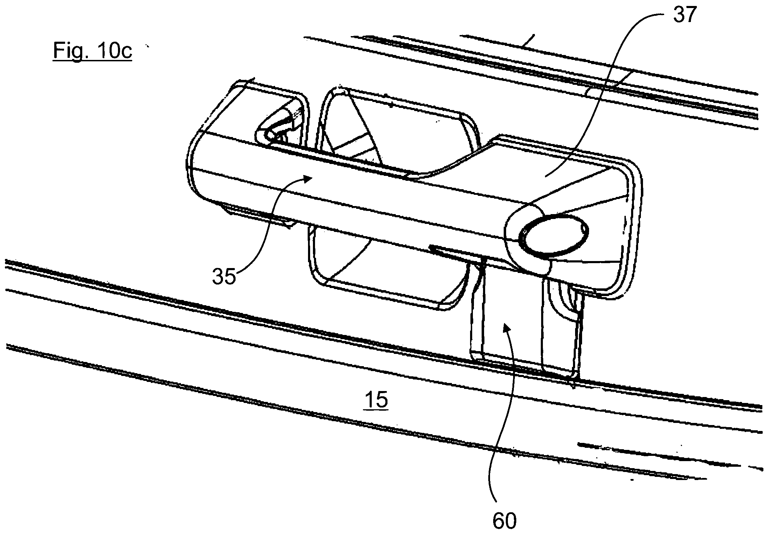

Wie dies insbesondere aus der Fig. 10a zu entnehmen ist, kann das Federelement 59 mit seinen Federnasen 61 in eine oder mehrere scharnierelementseitige Ausnehmungen 54a, hier am Scharnierschenkelteil 53a ausgebildet, eingesetzt bzw. eingerastet werden und dann die Scharnierabdeckung unter Zusammenpressen der Feder nach oben gedrückt werden, so dass die Scharnier-Abdeckung 60 in die in der Fig. 10a gezeigte Montageposition überführt werden kann, bei der die Scharnier-Abdeckung in Hochachsenrichtung gesehen einen oberen Frontklappen-Randbereich (gegebenenfalls unter Zwischenschaltung eines Dichtelementes) hintergreift, insbesondere abstützend hintergreift. Dadurch ist ein klapperfreier Aufbau sichergestellt und zudem neben der Abschirmfunktion auch eine ästhetisch anspruchsvolle Abdecklösung zur Verfügung gestellt, was insbesondere aus der Fig. 10c ersichtlich ist.

Es versteht sich, dass das Federelement 59 selbstverständlich auch andere geometrische Ausgestaltungen aufweisen kann. Die hier gewählte Ringform ist lediglich beispielhaft.

Wie dies weiter aus der Fig. 10a ersichtlich ist, können die beiden Scharnierschenkel 52 bzw. 53 grundsätzlich jede beliebige Form aufweisen und aus jedem geeigneten Material hergestellt werden. Besonders bevorzugt ist hier ein Stahlmaterial, mittels dem eine stabile Anbindung der Frontklappe am Fahrzeug, insbesondere an der Karosserie bewerkstelligt werden kann.

Der karosserieseitig festgelegte erste Scharnierschenkel 52 weist hier, ausgehend vom Verbindungsbereich mit den zweiten Scharnierschenkel 53 einen ersten, im Wesentlichen horizontal verlaufenden Bereich auf, an den sich dann nach hinten zur Karosserie 2 hin ein hutförmiger Abstütz- und Anlagebereich anschließt, der insbesondere im Bereich der in Hochachsenrichtung verlaufenden Hutprofilflächen 62a, 62b eine für eine Krafteinleitung und -abstützung optimale flächige Anlageverbindung an der Karosserie 2 erlaubt.

Wie dies weiter aus der Fig. 10a in Zusammenschau mit der Fig. 10c ersichtlich ist, ist der Handgriff 35 im Bereich seines hier im Wesentlichen als Hohlprofil ausgebildeten U-Schenkels 37 so ausgebildet, dass dieser den ersten Scharnierschenkel 52 sowohl von oben her abdeckt als auch vorne übergreift und abdeckt. Dadurch wird von der Sichtseite her ein optimaler designtechnisch hochwertiger Gesamteindruck vermittelt. Zudem kann sich der Handgriff 35 hier am Scharnierschenkel 52 abstützen bzw. liegt dieser von unten her gesehen in einer Anlageverbindung am Handgriff 35 an.

## Patentansprüche

1. Abdeckelementanordnung an einem Frontend eines Fahrzeugs, mit einem sich in Fahrzeugquerrichtung über das Frontend erstreckenden Abdeckelement, das mittels wenigstens eines Befestigungsmittels an einer Karosserie des Fahrzeugs festgelegt ist, wobei im Bereich des
Abdeckelementes (3) wenigstens ein Handgriff (35) vorgesehen ist, **dadurch gekennzeichnet, dass** der Handgriff (35) mittels wenigstens eines Befestigungsmittels (38), das durch eine abdeckelementseitige Durchgriffsöffnung (39) hindurchgeführt ist, mittelbar oder unmittelbar mit der Karosserie (2) verbunden ist.

2. Abdeckelementanordnung nach Anspruch 1, **dadurch gekennzeichnet, dass** der Handgriff (35) eine U-Form aufweist, wobei jedem der U-Schenkel (36, 37) eine abdeckelementseitige Durchgriffsöffnung (39) zugeordnet ist und/oder jeder der U-Schenkel (36, 37) mittels wenigstens einen Befestigungsmittels (38) mittelbar oder unmittelbar mit der Karosserie (2) verbunden ist.

3. Abdeckelementanordnung nach Anspruch 1 oder 2, **dadurch gekennzeichnet, dass** das wenigstens eine Befestigungsmittel (38) ein handgriffseitiges Durchgriffselement (40), insbesondere eine in den Handgriff integrierte Buchse, aufweist, mit dem der Handgriff (35) die abdeckelementseitige Durchgriffsöffnung (39) durchgreift und sich mittelbar oder unmittelbar an der Karosserie (2) abstützt.

4. Abdeckelementanordnung nach einem der vorhergehenden Ansprüche, **dadurch gekennzeichnet, dass** das Befestigungsmittel (38) eine Befestigungsschraube (41) umfasst oder durch eine solche gebildet.

5. Abdeckelementanordnung nach Anspruch 3 und 4, **dadurch gekennzeichnet, dass** die Befestigungsschraube (41) durch das Durchgriffselement (40) hindurchgeführt und mittelbar oder unmittelbar in die Karosserie (2) eingeschraubt ist, wobei die Befestigungsschraube (41) so ausgelegt und ausgebildet ist, dass diese im eingeschraubten Zustand das Durchgriffselement (40) und damit den Handgriff (35) lagefixiert.

6. Abdeckelementanordnung nach einem der vorhergehenden Ansprüche, **dadurch gekennzeichnet, dass** die abdeckelementseitige Durchgriffsöffnung (39) ein Übermaß gegenüber dem zugeordneten Befestigungsmittel (38), insbesondere gegenüber dem handgriffseitigen Durchgriffselement (40) aufweist.

7. Abdeckelementanordnung nach einem der vorhergehenden Ansprüche, **dadurch gekennzeichnet, dass** der Handgriff (35) im an der Karosserie (2) montierten Zustand an einem durchgrifföffnungsseitigen Randbereich des Abdeckelementes (3) anliegt, insbesondere wenigstens bereichsweise dicht anliegt.

8. Abdeckelementanordnung nach Anspruch 7, **dadurch gekennzeichnet, dass** der Handgriff (35) unter Zwischenschaltung eines Dichtelementes (43) an dem Abdeckelement (3) anliegt, insbesondere dergestalt anliegt, dass das Dichtelement (43) wenigstens bereichsweise um die abdeckelementseitige Durchgriffsöffnung (39) herum angeordnet ist und/oder dass das Dichtelement an einem freien Endbereich eines U-Schenkels (36, 37) eines U-förmig ausgebildeten Handgriffs (35) wenigstens bereichsweise randseitig umlaufend angeordnet, insbesondere dort aufgesetzt ist.

9. Abdeckelementanordnung nach einem der vorhergehenden Ansprüche, **dadurch gekennzeichnet, dass** in Fahrzeugquerrichtung (y) gesehen mehrere voneinander beabstandete Handgriffe (35) im Bereich des Abdeckelementes (3) angeordnet sind und/oder dass der wenigstens eine Handgriff (35) im Bereich unterhalb eines Scheibenwischers angeordnet ist.

10. Abdeckelementanordnung nach einem der vorhergehenden Ansprüche, **dadurch gekennzeichnet, dass** das Abdeckelement (3) im Anlage- und Anbindungsbereich des wenigstens einen Handgriffs (35), insbesondere im Anlage- und Anbindungsbereich eines U-Schenkels (37) eines Handgriffs (35), eine Scharnierausnehmung (51) aufweist, durch die ein erster mittelbar oder unmittelbar mit der Karosserie (2) verbundener Scharnierschenkel (52) eines Frontklappen-Scharnierelementes (54) von der Rückseite des Abdeckelementes (3) her nach vorne in einen handgriffseitigen, insbesondere U-schenkelseitigen, Aufnahmebereich (55) geführt ist, in dem der erste Scharnierschenkel (52) mit einem mittelbar oder unmittelbar mit einer Frontklappe (15) verbundenen zweiten Scharnierschenkel (53) schwenkbar verbunden ist.

11. Abdeckelementanordnung nach Anspruch 10, **dadurch gekennzeichnet, dass** der, vorzugsweise an der Rückseite der Frontklappe (15) angebundene, zweite Scharnierschenkel (53) mehrteilig ausgebildet ist, wobei bevorzugt vorgesehen ist, dass die einzelnen Scharnierschenkelteile (53a, 53b) mittels wenigstens einer einen Toleranzausgleich ermöglichenden Übermaßverbindung (56), insbesondere einer Langloch-Schraubverbindung, miteinander verbunden sind.

12. Abdeckelementanordnung nach Anspruch 10 oder 11, **dadurch gekennzeichnet, dass** eine das Frontklappen-Scharnierelement (54) abdeckende und zusammen mit diesem verschwenkbare Scharnier-Abdeckung (60) vorgesehen ist, die mittels wenigstens eines Federelementes (59) in der Abdeckposition gehalten ist, wobei bevorzugt vorgesehen ist, dass sich die Scharnier-Abdeckung (60) in Hochachsenrichtung gesehen einerseits frontklappenseitig abstützt, insbesondere einen oberen Frontklappen-Randbereich hintergreift, und sich andererseits mit dem abdeckungsseitig angeordneten Federelement (59) an dem Frontklappen-Scharnierelement (54) abstützt, insbesondere mit wenigstens einer Federnase (61) in eine scharnierelementseitige Ausnehmung (54a) des zweiten Scharnierschenkels (53) eingreift.

13. Abdeckelementanordnung nach Anspruch 12, **dadurch gekennzeichnet, dass** das Federelement (59) eine Ringform aufweist und mit der Scharnier-Abdeckung (60) verbunden ist und/oder dass die Scharnier-Abdeckung (60) im montierten Zustand an dem zugeordneten Scharnierschenkel (52) anliegt.

14. Abdeckelementanordnung nach einem der Ansprüche 10 bis 13, **dadurch gekennzeichnet, dass** der Handgriff (35) so ausgebildet ist, dass dieser den ersten Scharnierschenkel (52) wenigstens von oben her abdeckt und überdeckt, insbesondere auch vorne übergreift und abdeckt, wobei bevorzugt vorgesehen ist, dass der erste Scharnierschenkel (52) in Hochachsenrichtung gesehen in einer Anlageverbindung von unten her wenigstens bereichsweise am Handgriff (35) anliegt.

15. Abdeckelementanordnung nach einem der vorhergehenden Ansprüche, **dadurch gekennzeichnet, dass** das Abdeckelement (3) auf seiner der Karosserie (2) zugewandten Rückseite wenigstens einen Einhänge- und Positioniersteg (6) aufweist, mittels dem das Abdeckelement (3) an einer zugeordneten karosserieseitigen Stegaufnahme (8) einhängbar und positionierbar ist, wobei bevorzugt vorgesehen ist, dass der Einhänge- und Positioniersteg (6) mit wenigstens einem Dichtelement (7) versehen ist, dergestalt, dass der Einhänge- und Positioniersteg (6) im in der Stegaufnahme (8) aufgenommenen Zustand dicht an der Frontscheibe (5) anliegt.

16. Abdeckelementanordnung nach Anspruch 15, **dadurch gekennzeichnet, dass** die Stegaufnahme (8) durch wenigstens eine karosserieseitige, insbesondere an der Karosserie (2) festgelegte, und sich in Fahrzeug-Hochachsenrichtung (z) nach oben über einen unteren Scheibenrandbereich erstreckende Aufnahmeleiste gebildet ist, die zwischen sich und der Frontscheibe (5) einen, den Einhänge- und Positioniersteg (6) aufnehmenden Montage- und Aufnahmeraum (9) ausbildet, wobei bevorzugt vorgesehen ist, dass die wenigstens eine Aufnahmeleiste (8) durch eine Federleiste, vorzugsweise durch eine wenigstens bereichsweise elastisch rückfedernde Federleiste gebildet ist, die den, vorzugsweise mit einem Dichtelement (7) versehenen, Einhänge- und Positioniersteg (6) mit einer definierten Vorspannkraft an die Frontscheibe (5) presst und/oder die das Abdeckelement (3) in einer gewünschten Montageposition hält.

17. Abdeckelementanordnung nach einem der vorhergehenden Ansprüche, **dadurch gekennzeichnet, dass** das Abdeckelement (3) im montierten Zustand mit einem in Fahrzeug-Hochachsenrichtung (z) unteren Randbereich (13) unter Zwischenschaltung eines Dichtelementes (14) dicht an einem angrenzenden Bauteil (15), insbesondere an einer Frontklappe, anliegt und/oder dass das Abdeckelement (3) am in Fahrzeug-Hochachsenrichtung (z) unteren Randbereich (14) wenigstens eine Befestigungsstelle (19), vorzugsweise mehrere in Längsrichtung des Abdeckelementes (3) voneinander beabstandete Befestigungsstellen (19), aufweist, an der das Abdeckelement (3) mittels einer form- und/oder kraftschlüssigen Verbindung, insbesondere mittels einer Schraubverbindung, mittelbar oder unmittelbar an der Karosserie (2) festgelegt ist, wobei bevorzugt vorgesehen ist, dass wenigstens eine in einem unteren Randbereich (14), vorzugsweise in einem mittleren unteren Randbereich, des Abdeckelementes (3) vorgesehene Befestigungsstelle (19) einem karosserieseitig angeordneten oder ausgebildeten Halter (16) zugeordnet ist, der einen elastisch rückfedernden, der abdeckelementseitigen Befestigungsstelle (19) zugeordneten freien Endbereich als Anbindungsbereich aufweist und/oder der an der Karosserie (2) und/oder an einem Filtergehäuse (21) des Fahrzeugs festgelegt ist.

18. Abdeckelementanordnung nach einem der vorhergehenden Ansprüche, **dadurch gekennzeichnet, dass** das Abdeckelement (3) an in Fahrzeugquerrichtung (y) gegenüberliegenden seitlichen Randbereichen (23) mittelbar oder unmittelbar mittels einer einen Toleranzausgleich ermöglichenden Übermaßverbindung an der Karosserie (2) festlegbar ist, wobei bevorzugt vorgesehen ist, dass die Übermaßverbindung, insbesondere eine Langlochverbindung, eine abdeckelementseitige Übermaß-Ausnehmung (27), insbesondere ein Langloch, aufweist, die in Fahrzeug-Querrichtung und/oder in Fahrzeug-Hochachsenrichtung ein Übermaß gegenüber einem Schraubenschaft (30) einer Befestigungsschraube (29) aufweist, mittels der das Abdeckelement (3) in den seitlichen Randbereichen (23) festlegbar ist.

19. Abdeckelementanordnung nach einem der vorhergehenden Ansprüche, **dadurch gekennzeichnet, dass** das Abdeckelement (3) wenigstens eine Aufnahmeöffnung (47) aufweist, durch die eine Wischerachse eines Wischerarmes hindurchgeführt ist, wobei in die Aufnahmeöffnung (47) ein die Wischerachse dicht umschließender Dichtring (46), der vorzugsweise aus einem Elastomermaterial hergestellt ist, eingesetzt ist, insbesondere ein Dichtring (46) eingesetzt ist, der mit umfangsseitig voneinander beabstandeten Raststegen (50) einen Öffnungsrandbereich der Aufnahmeöffnung (47) formschlüssig hintergreift und/oder mit einem ringförmig geschlossenen Ringbund (49) die Wischerachse dicht umschließt.

20. Nutzfahrzeug, insbesondere Frontlenker-Lastkraftwagen mit im Wesentlichen ebener Frontendausgestaltung, mit einer Abdeckelementanordnung, insbesondere zur Abdeckung einer Wischeranlage, nach einem der vorhergehenden Ansprüche.

## Claims

1. Cover element assembly for a front end of a vehicle, with a cover element which extends over the front end in the transverse direction of the vehicle and is secured to a body of the vehicle by means of at least one fastening means, wherein at least one handle (35) is provided in the region of the cover element (3), **characterized in that** the handle (35) is indirectly or directly connected to the body (2) by means of at least one fastening means (38) which is guided through a cover-element-side reach-through opening (39).

2. Cover element assembly according to Claim 1, **characterized in that** the handle (35) has a U shape, wherein each of the U limbs (36, 37) is assigned a cover-element-side reach-through opening (39), and/or each of the U limbs (36, 37) is connected indirectly or directly to the body (2) by means of at least one fastening means (38).

3. Cover element assembly according to Claim 1 or 2, **characterized in that** the at least one fastening means (38) has a handle-side reach-through element (40), in particular a bushing integrated in the handle, with which the handle (35) reaches through the cover-element-side reach-through opening (39) and is supported directly or indirectly on the body (2).

4. Cover element assembly according to one of the preceding claims, **characterized in that** the fastening means (38) comprises a fastening screw (41) or is formed by such.

5. Cover element assembly according to Claims 3 and 4, **characterized in that** the fastening screw (41) is guided through the reach-through element (40) and screwed indirectly or directly into the body (2), wherein the fastening screw (41) is configured and designed in such a manner that said fastening screw, in the screwed-in state, positionally fixes the reach-through element (40) and therefore the handle (35).

6. Cover element assembly according to one of the preceding claims, **characterized in that** the cover-element-side reach-through opening (39) has an oversize in relation to the associated fastening means (38), in particular in relation to the handle-side reach-through element (40).

7. Cover element assembly according to one of the preceding claims, **characterized in that**, in the state mounted on the body (2), the handle (35) lies against a reach-through-opening-side edge region of the cover element, in particular lies tightly thereagainst at least in regions.

8. Cover element assembly according to Claim 7, **characterized in that** the handle (35) lies against the cover element (3) with the interconnection of a sealing element (43), in particular lies against said cover element in such a manner that the sealing element (43) is arranged at least in regions around the cover-element-side reach-through opening (39), and/or **in that** the sealing element is arranged at a free end region of a U limb (36, 37) of a U-shaped handle (35) in a manner encircling said end region at least in regions on the edge side, in particular is placed on there.

9. Cover element assembly according to one of the preceding claims, **characterized in that** a plurality of handles (35) which are spaced apart from one another are arranged in the region of the cover element (3), as seen in the transverse direction (y) of the vehicle, and/or **in that** the at least one handle (35) is arranged in the region below a wiper.

10. Cover element assembly according to one of the preceding claims, **characterized in that**, in the contact and connection region of the at least one handle (35), in particular in the contact and connection region of a U limb (37) of a handle (35), the cover element (3) has a hinge recess (51), by means of which a first hinge limb (52), which is connected indirectly or directly to the body (2), of a front flap hinge element (54) is guided from the rear side of the cover element (3) forwards into a handle-side, in particular U-limb-side, receiving region (55) in which the first hinge limb (52) is connected pivotably to a second hinge limb (53) which is connected indirectly or directly to a front flap (15).

11. Cover element assembly according to Claim 10, **characterized in that** the second hinge limb (53) which is preferably connected to the rear side of the front flap (15) is of multi-part design, wherein it is preferably provided that the individual hinge limb parts (53a, 53b) are connected to each other by means of at least one oversize connection (56) permitting compensation for tolerances, in particular an elongated-hole screw connection.

12. Cover element assembly according to Claim 10 or 11, **characterized in that** a hinge covering (60) is provided which covers the front flap hinge element (54) and is pivotable together therewith and is held in the cover position by means of at least one spring element (59), wherein it is preferably provided that the hinge covering (60), as seen in the direction of the vertical axis, firstly is supported on the front flap side, in particular reaches behind an upper front flap edge region, and secondly is supported by the spring element (59) arranged on the covering side on the front flap hinge element (54), in particular engages with at least one spring lug (61) into a hinge-element-side recess (54a) of the second hinge limb (53).

13. Cover element assembly according to Claim 12, **characterized in that** the spring element (59) has an annular shape and is connected to the hinge covering (60), and/or **in that** the hinge covering (60) in the mounted state lies against the associated hinge limb (52).

14. Cover element assembly according to one of Claims 10 to 13, **characterized in that** the handle (35) is designed in such a manner that it covers and overlaps the first hinge limb (52) at least from above, in particular also engages over and covers same at the front, wherein it is preferably provided that the first hinge limb (52), as seen in the direction of the vertical axis, lies from below at least in regions against the handle (35) in a contact connection.

15. Cover element assembly according to one of the preceding claims, **characterized in that** the cover element (3) has, on its rear side facing the body (2), at least one hooking-in and positioning web (6), by means of which the cover element (3) can be hooked in and positioned on an associated body-side web receptacle (8), wherein it is preferably provided that the hooking-in and positioning web (6) is provided with at least one sealing element (7) in such a manner that, in the state accommodated in the web receptacle (8), the hooking-in and positioning web (6) lies tightly against the windscreen (5).

16. Cover element assembly according to Claim 15, **characterized in that** the web receptacle (8) is formed by at least one body-side receiving strip which is in particular secured on the body (2) and extends upwards in the direction of the vertical axis (z) of the vehicle over a lower windscreen edge region and forms, between itself and the windscreen (5), an installation and receiving space (9) receiving the hooking-in and positioning web (6), wherein it is preferably provided that the at least one receiving strip (8) is formed by a spring strip, preferably by a spring strip which springs back elastically at least in regions and presses the hooking-in and positioning web (6), which is preferably provided with a sealing element (7), against the windscreen (5) with a defined prestressing force, and/or holds the cover element (3) in a desired installation position.

17. Cover element assembly according to one of the preceding claims, **characterized in that**, in the mounted state, the cover element (3) lies tightly with a lower edge region (13) in the direction of the vertical axis (z) of the vehicle, and with the interconnection of a sealing element (14), against an adjacent component (15), in particular against a front flap, and/or **in that** the cover element (3) has, on the lower edge region (14) in the direction of the vertical axis (z) of the vehicle, at least one fastening point (19), preferably a plurality of fastening points (19) which are spaced apart from one another in the longitudinal direction of the cover element (3) and at which the cover element (3) is secured indirectly or directly to the body (2) by means of a form-fitting and/or force-fitting connection, in particular by means of a screw connection, wherein it is preferably provided that at least one fastening point (19) provided in a lower edge region (14), preferably in a central lower edge region, of the cover element (3) is assigned to a holder (16) which is arranged or formed on the body side and has an elastically springing-back free end region, which is assigned to the cover-element-side fastening point (19), as the connection region and/or which is secured on the body (2) and/or on a filter housing (21) of the vehicle.

18. Cover element assembly according to one of the preceding claims, **characterized in that** the cover element (3) can be secured at opposite lateral edge regions (23) in the transverse direction (y) of the vehicle indirectly or directly on the body (2) by means of an oversize connection permitting compensation for tolerances, wherein it is preferably provided that the oversize connection, in particular an elongated hole connection, has a cover-element-side oversize recess (27), in particular an elongated hole, which has an oversize in the transverse direction of the vehicle and/or in the direction of the vertical axis of the vehicle in relation to a stem (30) of a fastening screw (29) by means of which the cover element (3) can be secured in the lateral edge regions (23).

19. Cover element assembly according to one of the preceding claims, **characterized in that** the cover element (3) has at least one receiving opening (47) through which a spindle of a wiper arm is guided, wherein a sealing ring (46) which tightly surrounds the wiper spindle and is preferably produced from an elastomer material, is inserted into the receiving opening (47), in particular a sealing ring (46) is inserted which, with latching webs (50) spaced apart from one another circumferentially, engages in a form-fitting manner behind an opening edge region of the receiving opening (47) and/or tightly surrounds the wiper spindle with an annularly closed annular collar (49).

20. Commercial vehicle, in particular heavy goods vehicle with front-wheel steering and with a substantially flat front end configuration, with a cover element assembly, in particular for covering a wiper system, according to one of the preceding claims.

## Revendications

1. Agencement d'éléments de recouvrement à une extrémité frontale d'un véhicule, comprenant un élément de recouvrement s'étendant dans la direction transversale du véhicule par-dessus l'extrémité frontale, lequel est fixé au moins au moyen d'un moyen de fixation à une carrosserie du véhicule, au moins une poignée (35) étant prévue dans la région de l'élément de recouvrement (3), **caractérisé en ce que** la poignée (35) est connectée de manière directe ou indirecte à la carrosserie (2) au moyen d'au moins un moyen de fixation (38), qui est guidé à travers une ouverture de préhension (39) du côté de l'élément de recouvrement.

2. Agencement d'éléments de recouvrement selon la revendication 1, **caractérisé en ce que** la poignée (35) présente une forme en U, une ouverture de préhension (39) du côté des éléments de recouvrement étant associée à chacune des branches du U (36, 37) et/ou chacune des branches du U (36, 37) étant connectée de manière directe ou indirecte à la carrosserie (2) au moyen d'au moins un moyen de fixation (38).

3. Agencement d'éléments de recouvrement selon la revendication 1 ou 2, **caractérisé en ce que** l'au moins un moyen de fixation (38) présente un élément de préhension (40) du côté de la poignée, en particulier une douille intégrée dans la poignée, avec lequel la poignée (35) vient en prise à travers l'ouverture de préhension (39) du côté de l'élément de recouvrement et vient en butée directement ou indirectement contre la carrosserie (2).

4. Agencement d'éléments de recouvrement selon l'une quelconque des revendications précédentes, **caractérisé en ce que** le moyen de fixation (38) comprend une vis de fixation (41) ou est formé par une telle vis.

5. Agencement d'éléments de recouvrement selon les revendications 3 et 4, **caractérisé en ce que** la vis de fixation (41) est guidée à travers l'élément de préhension (40) et est vissée de manière directe ou indirecte dans la carrosserie (2), la vis de fixation (41) étant conçue et réalisée de telle sorte que celle-ci, dans l'état vissé, fixe en position l'élément de préhension (40) et par conséquent la poignée (35).

6. Agencement d'éléments de recouvrement selon l'une quelconque des revendications précédentes, **caractérisé en ce que** l'ouverture de préhension (39) du côté de l'élément de recouvrement présente un surdimensionnement par rapport au moyen de fixation associé (38), en particulier par rapport à l'élément de préhension (40) du côté de la poignée.

7. Agencement d'éléments de recouvrement selon l'une quelconque des revendications précédentes, **caractérisé en ce que** la poignée (35), dans l'état monté sur la carrosserie (2), s'applique, en particulier s'applique au moins en partie hermétiquement, contre une région de bord de l'élément de recouvrement (3) du côté de l'ouverture de préhension.

8. Agencement d'éléments de recouvrement selon la revendication 7, **caractérisé en ce que** la poignée (35) s'applique contre l'élément de recouvrement (3) en interposant un élément d'étanchéité (43), en particulier s'applique de telle sorte que l'élément d'étanchéité (43) soit disposé au moins en partie autour de l'ouverture de préhension (39) du côté de l'élément de recouvrement et/ou **en ce que** l'élément d'étanchéité est disposé au moins en partie sur le pourtour du côté du bord, au niveau d'une région d'extrémité libre d'une branche de U (36, 37) d'une poignée (35) réalisée en forme de U, en particulier est placé à cet endroit.

9. Agencement d'éléments de recouvrement selon l'une quelconque des revendications précédentes, **caractérisé en ce que** vu dans la direction transversale du véhicule (y), plusieurs poignées (35) espacées les unes des autres sont disposées dans la région de l'élément de recouvrement (3) et/ou **en ce que** l'au moins une poignée (35) est disposée dans la région en dessous d'un essuie-glace.

10. Agencement d'éléments de recouvrement selon l'une quelconque des revendications précédentes, **caractérisé en ce que** l'élément de recouvrement (3), dans la région d'appui et de liaison de l'au moins une poignée (35), en particulier dans la région d'appui et de liaison d'une branche de U (37) d'une poignée (35), présente un évidement de charnière (51) à travers lequel est guidée une première branche de charnière (52) d'un élément de charnière à volet avant (54), connectée directement ou indirectement à la carrosserie (2) depuis le côté arrière de l'élément de recouvrement (3) vers l'avant dans une région de réception (55) du côté de la poignée, en particulier du côté de la branche du U, dans laquelle la première branche de charnière (52) est connectée de manière pivotante à une deuxième branche de charnière (53) connectée directement ou indirectement à un volet avant (15).

11. Agencement d'éléments de recouvrement selon la revendication 10, **caractérisé en ce que** la deuxième branche de charnière (53) reliée de préférence au côté arrière du volet avant (15) est réalisée en plusieurs parties, et de préférence, il est prévu que les parties de branche de charnière individuelles (53a, 53b) soient connectées les unes aux autres au moyen d'au moins une liaison à surdimensionnement (56), en particulier une connexion par vissage à trou oblong, permettant une compensation des tolérances.

12. Agencement d'éléments de recouvrement selon la revendication 10 ou 11, **caractérisé en ce qu'**il est prévu un recouvrement de charnière (60) recouvrant l'élément de charnière à volet avant (54) et pouvant pivoter conjointement avec celui-ci, lequel est retenu au moyen d'au moins un élément de ressort (59) dans la position de recouvrement, et de préférence, il est prévu que le recouvrement de charnière (60), vu dans la direction de l'axe vertical, s'appuie d'une part du côté du volet avant, en particulier vienne en prise par l'arrière avec une région de bord supérieure du volet avant, et s'appuie d'autre part avec l'élément de ressort (59) disposé du côté de recouvrement contre l'élément de charnière à volet avant (54), en particulier s'engage avec au moins un ergot de ressort (61) dans un évidement (54a) du côté de l'élément de charnière de la deuxième branche de charnière (53).

13. Agencement d'éléments de recouvrement selon la revendication 12, **caractérisé en ce que** l'élément de ressort (59) présente une forme annulaire et est connecté au recouvrement de charnière (60) et/ou **en ce que** le recouvrement de charnière (60) s'applique, dans l'état monté, contre la branche de charnière associée (52).

14. Agencement d'éléments de recouvrement selon l'une quelconque des revendications 10 à 13, **caractérisé en ce que** la poignée (35) est réalisée de telle sorte que celle-ci couvre et recouvre la première branche de charnière (52) au moins par le dessus, en particulier vienne en prise par le dessus et recouvre celle-ci également vers l'avant, et de préférence il est prévu que la première branche de charnière (52), vu dans la direction de l'axe vertical, s'applique dans une liaison d'appui par le dessous au moins en partie contre la poignée (35).

15. Agencement d'éléments de recouvrement selon l'une quelconque des revendications précédentes, **caractérisé en ce que** l'élément de recouvrement (3) présente, sur son côté arrière tourné vers la carrosserie (2), au moins une nervure d'accrochage et de positionnement (6) au moyen de laquelle l'élément de recouvrement (3) peut être accroché et positionné au niveau d'un logement de nervure associé (8) du côté de la carrosserie, et de préférence il est prévu que la nervure d'accrochage et de positionnement (6) soit pourvue d'au moins un élément d'étanchéité (7) de telle sorte que la nervure d'accrochage et de positionnement (6) s'applique hermétiquement contre la vitre avant (5) dans l'état reçu dans le logement de nervure (8).

16. Agencement d'éléments de recouvrement selon la revendication 15, **caractérisé en ce que** le logement de nervure (8) est formé par au moins une baguette de réception du côté de la carrosserie, en particulier fixée à la carrosserie (2), et s'étendant dans la direction de l'axe vertical du véhicule (z) vers le haut sur une région inférieure du bord de la vitre, qui constitue, entre elles et la vitre avant (5), un espace de montage et de réception (9) recevant la nervure d'accrochage et de positionnement (6), et de préférence il est prévu que l'au moins une baguette de réception (8) soit formée par une baguette à ressort, de préférence par une baguette à ressort au moins en partie à rappel élastique, qui presse la nervure d'accrochage et de positionnement (6), de préférence pourvue d'un élément d'étanchéité (7), avec une force de précontrainte définie contre la vitre avant (5) et/ou qui retient l'élément de recouvrement (3) dans une position de montage souhaitée.

17. Agencement d'éléments de recouvrement selon l'une quelconque des revendications précédentes, **caractérisé en ce que** l'élément de recouvrement (3), dans l'état monté, s'applique avec une région de bord inférieure (13) dans la direction de l'axe vertical du véhicule (z) en interposant un élément d'étanchéité (14) de manière hermétique contre un composant adjacent (15), en particulier contre un volet avant, et/ou **en ce que** l'élément de recouvrement (3) présente, au niveau de la région de bord inférieure (14) dans la direction de l'axe vertical du véhicule (z), au moins une zone de fixation (19), de préférence plusieurs zones de fixation (19) espacées les unes des autres dans la direction longitudinale de l'élément de recouvrement (3), au niveau de laquelle l'élément de recouvrement (3) est fixé au moyen d'une liaison par engagement par correspondance de formes et/ou par force, en particulier au moyen d'une liaison par vissage, de manière directe ou indirecte à la carrosserie (2), et de préférence il est prévu qu'au moins une zone de fixation (19) prévue dans une région de bord inférieure (14), de préférence dans une région de bord inférieure centrale de l'élément de recouvrement (3), soit associée à un dispositif de retenue (16) disposé ou réalisé du côté de la carrosserie, qui présente en tant que région de liaison, une région d'extrémité libre à rappel élastique associée à la zone de fixation (19) du côté de l'élément de recouvrement et/ou qui est fixé à la carrosserie (2) et/ou à un boîtier de filtre (21) du véhicule.

18. Agencement d'éléments de recouvrement selon l'une quelconque des revendications précédentes, **caractérisé en ce que** l'élément de recouvrement (3) peut être fixé à la carrosserie (2) au niveau de régions de bord latérales (23) opposées dans la direction transversale du véhicule (y), de manière directe ou indirecte au moyen d'une connexion par surdimensionnement permettant une compensation des tolérances, et de préférence il est prévu que la connexion à surdimensionnement, en particulier une connexion à trou oblong, présente un évidement a surdimensionnement (27) du côté de l'élément de recouvrement, en particulier un trou oblong qui présente dans la direction transversale du véhicule et/ou dans la direction de l'axe vertical du véhicule, un surdimensionnement par rapport à une tige de vis (30) d'une vis de fixation (29) au moyen de laquelle l'élément de recouvrement (3) peut être fixé dans les régions de bord latérales (23).

19. Agencement d'éléments de recouvrement selon l'une quelconque des revendications précédentes, **caractérisé en ce que** l'élément de recouvrement (3) présente au moins une ouverture de réception (47) à travers laquelle est guidé un axe d'essuie-glace d'un bras d'essuie-glace, une bague d'étanchéité (46) entourant hermétiquement l'axe d'essuie-glace, qui de préférence est fabriquée à partir de matériau élastomère, étant insérée dans l'ouverture de réception (47), en particulier une bague d'étanchéité (46) étant insérée, laquelle vient en prise par l'arrière, par engagement par correspondance de formes avec des nervures d'encliquetage (50) espacées les unes des autres sur la périphérie, avec une région de bord d'ouverture de l'ouverture de réception (47) et/ou entoure hermétiquement l'axe d'essuie-glace avec un épaulement annulaire (49) fermé en anneau.

20. Véhicule utilitaire, en particulier poids-lourds à cabine avancée, comprenant une configuration d'extrémité avant essentiellement plane, avec un agencement d'éléments de recouvrement, en particulier pour recouvrir une installation d'essuie-glace, selon l'une quelconque des revendications précédentes.
